# EUROPEAN PATENT SPECIFICATION

(11) **EP 4 475 212 B1**
(45) Date of publication and mention of the grant of the patent: **14.05.2025**
(21) Application number: 24165429.2
(22) Date of filing: 22.03.2024
(51) Int. Cl.: H01M 4/133, H01M 4/136, H01M 4/36, H01M 4/58, H01M 4/587, H01M 10/0525, H01M 10/0567, H01M 50/107

(54) **RECHARGEABLE BATTERY**
WIEDERAUFLADBARE BATTERIE
BATTERIE RECHARGEABLE

(30) Priority: 05.06.2023 KR 20230072443
(43) Date of publication of application: 11.12.2024
(73) Proprietor: Samsung SDI Co., Ltd., Yongin-si, Gyeonggi-do 17084 (KR)
(72) Inventor: Kim, Aeran, 17084 Yongin-si, Gyeonggi-do (KR); Kim, Myunghoon, 17084 Yongin-si, Gyeonggi-do (KR); Park, Injun, 17084 Yongin-si, Gyeonggi-do (KR); Oh, Seungryong, 17084 Yongin-si, Gyeonggi-do (KR); Shin, Jeongmin, 17084 Yongin-si, Gyeonggi-do (KR); Kim, Yunhee, 17084 Yongin-si, Gyeonggi-do (KR)
(74) Representative: Gulde & Partner

(56) References cited:
- CN-A- 113 328 141
- US-A1- 2023 098 836

## Description

### BACKGROUND

### 1. Field

The invention related to a rechargeable lithium battery.

### 2. Description of the Related Art

A rechargeable lithium battery may be recharged and has three or more times higher energy density per unit weight than an existing lead storage battery, nickelcadmium battery, nickel hydrogen battery, nickel zinc battery and the like, and may be highly charged and thus, is commercially manufactured for a laptop, a cell phone, an electric tool, an electric bike, and the like, and research on improvement of additional energy density have been actively made.

The rechargeable lithium battery may be manufactured by injecting electrolyte into a battery cell, which includes a positive electrode including a positive electrode active material capable of intercalating/deintercalating lithium and a negative electrode including a negative electrode active material capable of intercalating/deintercalating lithium.

One of the recent development directions for a rechargeable lithium battery is to improve high-temperature characteristics. In general, high temperatures can cause significant problems such as elution of metal being from the electrolyte, increase of an electrical resistance , and/or reduction of cycle-life characteristics.

However, if the battery case housing the electrode assembly is a cylindrical can, the above problems may become worse depending on a volume of the cylindrical can.

### SUMMARY

The invention is defined by the appended claims. The description that follows is subjected to this limitation. Any disclosure lying outside the scope of said claims is only intended for illustrative as well as comparative purposes. Embodiments of the present invention reduce elution of metals at high temperatures, resistance increases, and/or cycle-life decreases in a rechargeable lithium battery using a cylindrical can.

There is provided a rechargeable lithium battery including a cylindrical can; an electrode assembly accommodated in the cylindrical can; and an electrolyte impregnated in the electrode assembly, wherein a volume of the cylindrical can is controlled and a type and a content of the electrolyte additive are limited. The volume of the cylindrical can and the type and content of the electrolyte additive will be described in more detail herein below.

The rechargeable lithium battery can suppress or reduce metal elution and suppress or reduce an increase in resistance at high temperatures, and/or secure or improve the cycle-life of the rechargeable lithium battery by controlling the volume of the cylindrical can and limiting the type and content of the electrolyte additive.

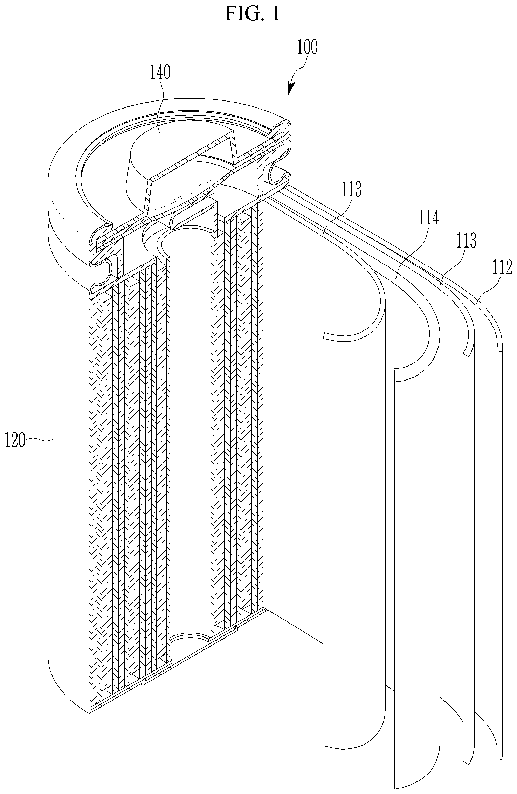

### BRIEF DESCRIPTION OF THE DRAWING

The accompanied drawing, together with the specification, illustrate embodiments of the subject matter of the present invention, and, together with the description, serve to explain principles of embodiments of the subject matter of the present invention.

The accompanied drawing is a schematic view showing a rechargeable lithium battery according to some example embodiments of the present invention.

### DETAILED DESCRIPTION

Hereinafter, a rechargeable lithium battery according to some example embodiments of the present invention will be described in more detail with reference to the attached drawing. However, these embodiments are examples, the present disclosure is not limited thereto and the disclosure is defined by the scope of the appended claims.

According to the present invention, there is provided a rechargeable lithium battery including a cylindrical can; an electrode assembly accommodated in the cylindrical can; and an electrolyte impregnated in the electrode assembly.

The rechargeable lithium battery can suppress or reduce metal elution and suppress or reduce an increase in resistance at high temperatures, and/or secure or improve cycle-life of the rechargeable lithium battery by controlling the volume of the cylindrical can and limiting the type and content of the electrolyte additive. Herein, the term "content" is used synonymously with the term "amount."

First, a description of the volume of the cylindrical can is as follows.

The cylindrical can has a volume of greater than 15 cm³, and may have a diameter of greater than 1.2 cm, and a height of greater than 0.5 cm. If the volume of the cylindrical can is significantly smaller than 15 cm³, there is no significant change in an amount of metal elution at high temperature even if the type and content of the electrolyte additive are changed. If the volume of the cylindrical can exceeds 15 cm³, an amount of metal elution changes as the type and content of the electrolyte additive changes. For example, in some embodiments, the cylindrical can may have a volume of greater than or equal to 16 cm³, a diameter of greater than or equal to 1.8 cm, and a height of greater than or equal to 6.5 cm.

In some embodiments, the volume of the cylindrical can may be less than or equal to 296 cm³, the diameter may be less than or equal to 5.6 cm, and the height may be less than or equal to 12.0 cm. If the volume of the cylindrical can exceeds 296 cm³, the amount of metal elution at high temperature may excessively increase, and resistance may increase and cycle-life of the rechargeable lithium battery may be reduced, regardless of the type and content of the electrolyte additive. In some embodiments, if the volume of the cylindrical can is less than or equal to 296 cm³, the amount of metal elution changes as the type and content of the electrolyte additive changes. For example, in some embodiments, the cylindrical can may have a volume of less than or equal to 133 cm³, a diameter of less than or equal to 4.6 cm, and a height of less than or equal to 8.0 cm.

A description of the electrolyte including the above two types of additives is as follows.

The electrolyte includes a non-aqueous organic solvent, a lithium salt, a first additive, and a second additive; wherein the first additive includes a compound represented by Chemical Formula 1; the second additive includes a compound represented by Chemical Formula 2, a derivative thereof, and/or an adduct thereof; and a content of the second additive is less than about 5 wt% based on 100 wt% of the electrolyte: 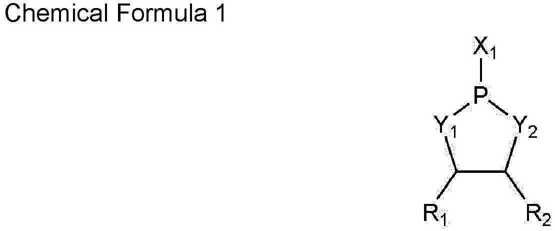
wherein, in Chemical Formula 1, X₁ is a halogen atom; Y₁ and Y₂ are each independently O or S; R₁ and R₂ are each independently H, a halogen atom, a substituted or unsubstituted C1 to C10 alkyl group, a vinyl group, a substituted or unsubstituted C6 to C10 aryl group, or a substituted or unsubstituted C2 to C10 heteroaryl group including a hetero atom of N, O, or P; 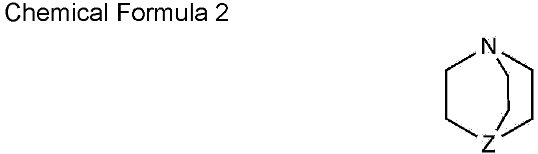
wherein, in Chemical Formula 2, Z is N or CH.

The first additive (compound represented by Chemical Formula 1) may stabilize the lithium salt to suppress or reduce side reactions of the electrolyte, and the second additive (compound represented by Chemical Formula 2) may be absorbed on the surface of the positive electrode through coordination of a lone pair of nitrogen atoms in the additive structure with a transition metal to stabilize the positive electrode and in some embodiments, suppress or reduce side reactions due to precipitation of the transition metal to improve cycle-life and high-temperature characteristics of the rechargeable battery.

However, when using the two types of additives concurrently, the content of the second additive in the electrolyte needs to be controlled to less than 5 wt%. If the content of the second additive in the electrolyte is greater than or equal to 5 wt%, resistance may increase, which may cause a problem in which the cycle-life of the rechargeable lithium battery is reduced at high temperatures. However, if the content of the second additive in the electrolyte is less than 5 wt%, the cycle-life may be secured or improved while suppressing or reducing an increase in resistance of the rechargeable lithium battery at high temperatures.

Accordingly, compared to where only one of the additives or two types of additives are used concurrently and the content of the second additive in the electrolyte is controlled to greater than or equal to 5 wt%; when the two types of additives are used concurrently and the content of the second additive in the electrolyte is controlled to less than 5 wt%, high-temperature characteristics are improved in a rechargeable lithium battery.

The first additive includes a compound represented by Chemical Formula 1:

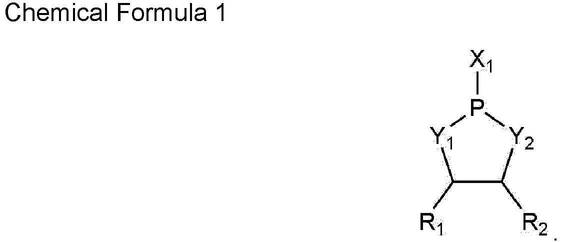

The description of Chemical Formula 1 may be as follows:
X₁ is a halogen atom, and, for example, may be a fluorine atom.
Y₁ and Y₂ are each independently be O or S, and, for example, both may be O.

A representative example of the first additive may be a compound represented by Chemical Formula 1-1-1:

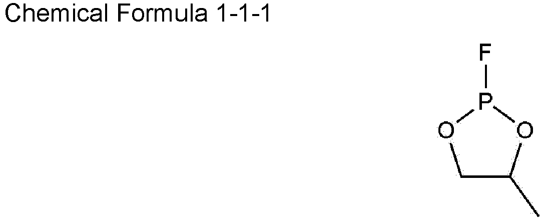

A content of the first additive may be greater than or equal to 0.05 wt%, greater than or equal to 0.1 wt%, or greater than or equal to 0.5 wt%; and may be less than or equal to 3 wt% or less than or equal to 2 wt% based on 100 wt% of the electrolyte. Within this range, an effect of improving high-temperature characteristics by the first additive can be significantly exhibited.

The second additive includes a compound represented by Chemical Formula 2, a derivative thereof, and/or an adduct thereof.

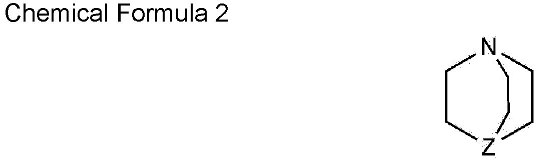

In Chemical Formula 2, Z is N or CH.

In Chemical Formula 2, when Z is N, the second additive may be a compound represented by Chemical Formula 2-1-1. In some embodiments, when Z in Chemical Formula 2 is CH, the second additive may be a compound represented by Chemical Formula 2-1-2.

The adduct of Chemical Formula 2 may include an adduct obtained by adding trimethyl aluminum, sulfur dioxide, borate, and/or hydrosilane to the compound represented by Chemical Formula 2. In some embodiments, the adduct of Chemical Formula 2 may be a compound represented by Chemical Formula 2-1 or Chemical Formula 2-2.

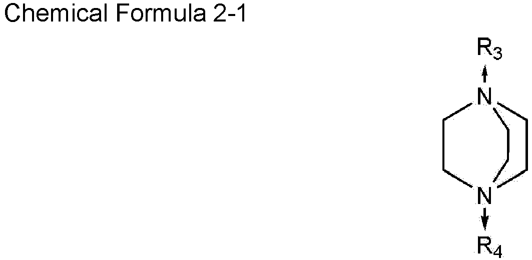

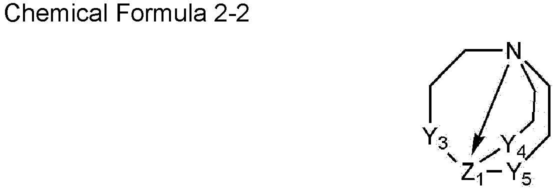

In the above formulas 2-1 and 2-2, respectively, the "arrow (→)" is an arrow drawn from the atom that donates electrons to the side that receives electrons, and means a coordination bond.

R₃ and R₄ may each independently be trimethylaluminum or sulfur dioxide. Y₃ to Y₅ may each independently be O or S, and, for example, all of Y₃ to Y₅ may be O. Z₁ may be B or SiH.

Representative examples of the second additive are as follows:

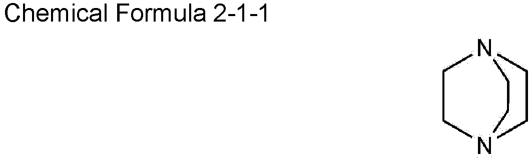

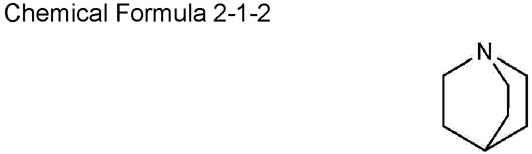

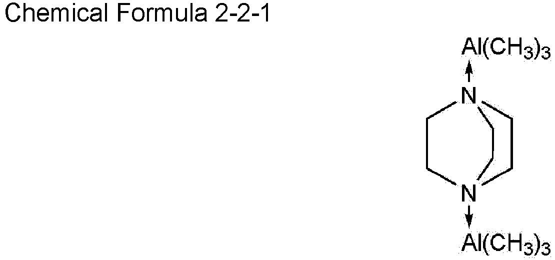

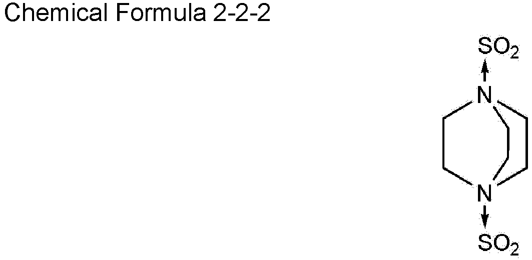

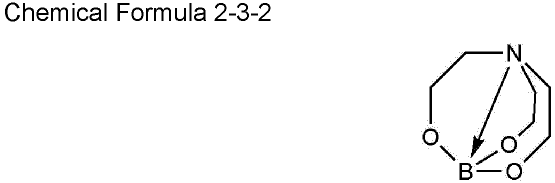

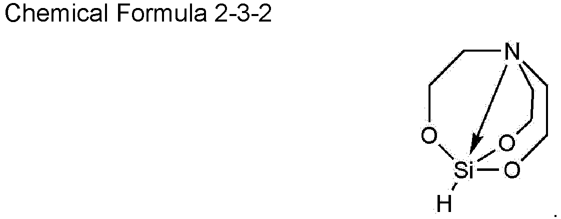

The content of the second additive in 100 wt% of the electrolyte is greater than or equal to 0.05 wt%, and may be greater than or equal to 0.1 wt%, or greater than or equal to 0.5 wt%; and may be less than or equal to 3 wt% or less than or equal to 2 wt%. Within this range, an effect of improving high-temperature characteristics by the second additive can be significantly exhibited.

In some embodiments, a weight ratio of the first additive and the second additive may be 1:0.1 to 1:3. In this way, when the second additive is used in an amount of 0.1 to 1.3 parts by weight based on 1 part by weight of the first additive, the synergistic effect of the two types of additives can be further increased.

The non-aqueous organic solvent serves as a medium for transmitting ions taking part in the electrochemical reaction of a battery.

The non-aqueous organic solvent may include at least one of a carbonate-based solvent, an ester-based solvent, an ether-based solvent, a ketone-based solvent, an alcohol-based solvent, and an aprotic solvent.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methylpropionate, ethylpropionate, propyl propionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. The ketone-based solvent may include cyclohexanone and/or the like. The alcohol-based solvent may include ethyl alcohol, isopropyl alcohol, and/or the like, and examples of the aprotic solvent include nitriles such as R-CN (wherein R is a C2 to C20 linear, branched, or cyclic hydrocarbon group, a double bond, an aromatic ring, or an ether bond), amides such as dimethylformamide, dioxolanes such as 1,3-dioxolane, sulfolanes, and/or the like.

The non-aqueous organic solvent may be used alone or in combination with one or more of them, and when used in combination with one or more, a mixing ratio may be suitably or appropriately adjusted according to suitable or desired battery performance, which should be well understood by those skilled in the art upon reviewing this disclosure.

The carbonate-based solvent is prepared by mixing together a cyclic carbonate and a chain carbonate. The cyclic carbonate and chain carbonate are mixed together in a volume ratio of 5:95 to 50:50. When the mixture is used as an electrolyte, it may have enhanced performance.

In some embodiments, ethylene carbonate (EC) may be used as the cyclic carbonate, and ethylmethyl carbonate (EMC) and dimethyl carbonate (DMC) may be used as the chain carbonate.

In some embodiments, the non-aqueous organic solvent may include a carbonate-based solvent in which ethylene carbonate (EC), ethylmethyl carbonate (EMC), and dimethyl carbonate (DMC) are mixed together. For example, the carbonate-based solvent may include ethylene carbonate (EC), ethylmethyl carbonate (EMC), and dimethyl carbonate (DMC) mixed together in a volume ratio of EC:EMC:DMC = 1:0.5:5 to 5:3:10, which may improve performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of 1:1 to 30:1.

In order to improve battery cycle-life, the electrolyte may further include vinylene carbonate, vinyl ethylene carbonate, and/or an ethylene carbonate-based compound of Chemical Formula 3 as a cycle-life improving additive.

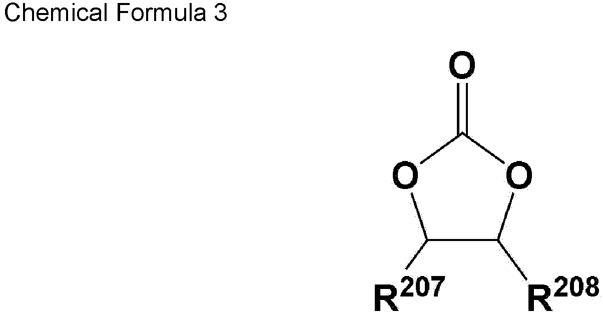

In Chemical Formula 3, R²⁰⁷ and R²⁰⁸ are the same or different and are selected from hydrogen, a halogen, a cyano group (CN), a nitro group (NO₂), and a C1 to C5 fluoroalkyl group, provided that at least one selected from R²⁰⁷ and R²⁰⁸ is a halogen, a cyano group (CN), a nitro group (NO₂), or a C1 to C5 fluoroalkyl group, and R²⁰⁷ and R²⁰⁸ are not concurrently hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle-life may be used within a suitable or appropriate range.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), wherein, x and y are natural numbers, for example an integer of 1 to 20, LiCl, Lil, and LiB(C₂O₄)₂ (lithium bis(oxalato) borate: LiBOB). The lithium salt may be used in a concentration in a range from 0.1 M to 2.0 M. When the lithium salt is included at the above concentration range, an electrolyte may have excellent performance and lithium ion mobility due to suitable or optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

For example, at least one composite oxide of lithium and a metal of cobalt, manganese, nickel, or a combination thereof may be used.

The composite oxide having a coating layer on the surface thereof may be used, or a mixture of the composite oxide and the composite oxide having a coating layer may be used. The coating layer may include a coating element compound selected from an oxide of the coating element, a hydroxide of the coating element, an oxyhydroxide of the coating element, an oxycarbonate of the coating element, or a hydroxycarbonate of the coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any suitable processes generally used in the art as long as it does not (or substantially does not) cause any side effects (e.g., any undesirable side effects) on the properties of the positive electrode active material (e.g., spray coating, dipping), which should be readily apparent to persons having ordinary skill in this art upon review of this disclosure, and thus a detailed description thereof is not necessary here.

In some embodiments, the positive electrode active material may include a lithium nickel-based composite oxide represented by Chemical Formula A1:

Chemical Formula A1 Liₐ₁Niₓ₁M¹_{y1}M²_{z1}O_{2-b1}X_{b1}.

In Chemical Formula A1, 0.9≤a1≤1.2, 0.7≤x1≤1, 0≤y1≤0.2, 0≤z1≤0.2, 0.9≤x1+y1+z1≤1.1, and 0≤b1≤0.1; M¹ and M² are each independently one or more element selected from Al, B, Ba, Ca, Ce, Co, Cr, Cu, Fe, Mg, Mn, Mo, Nb, Si, Sr, Ti, V, W, and Zr; and X is one or more element selected from F, P, and S.

In Chemical Formula A1, 0.75≤x1≤1, 0≤y1≤0.18, and 0≤z1≤0.18; 0.85≤x1≤1, 0≤y1≤0.15, and 0≤z1≤0.15; or 0.9≤x1≤1, 0≤y1≤0.1, and 0≤z1≤0.1.

For example, the positive electrode active material may include a lithium nickel-based composite oxide represented by Chemical Formula A2. The compound represented by Chemical Formula A2 may be referred to as a lithium nickel cobalt-based complex oxide:

Chemical Formula A2 Liₐ₂Niₓ₂Co_{y2}M³_{z2}O_{2-b2}X_{b2}.

In Chemical Formula A2, 0.9≤a2≤1.8, 0.7≤x2<1, 0<y2≤0.2, 0≤z2≤0.2, 0.9≤x2+y2+z2≤1.1, and 0≤b2≤0.1, M³ is one or more element selected from Al, B, Ba, Ca, Ce, Cr, Fe, Mg, Mn, Mo, Nb, Si, Sr, Ti, V, W, and Zr, and X is one or more element selected from F, P, and S.

In Chemical Formula A2, 0.75≤x2≤0.99, 0≤y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.

As an example, the positive electrode active material may include a lithium nickel-based composite oxide represented by Chemical Formula A3. The compound of Chemical Formula A3 may be referred to as a lithium nickel-cobalt-aluminum oxide or a lithium nickel-cobalt-manganese oxide.

Chemical Formula A3 Liₐ₃Niₓ₃Co_{y3}M⁴_{z3}M⁵_{w3}O_{2-b3}X_{b3}

In Chemical Formula A3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is one or more element selected from Al, and Mn, M⁵ is one or more element selected from B, Ba, Ca, Ce, Cr, Fe, Mg, Mo, Nb, Si, Sr, Ti, V, W, and Zr, and X is one or more element selected from F, P, and S.

In Chemical Formula A3, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.

As an example, the positive electrode active material may include a lithium nickel-based composite oxide represented by Chemical Formula A4. The compound of Chemical Formula A4 may be referred to as a cobalt-free lithium nickel-manganese oxide.

Chemical Formula A4 Liₐ₄Niₓ₄Mn_{y4}M⁶_{z4}O_{2-b4}X_{b4}

In Chemical Formula A4, 0.9≤a2≤1.8, 0.7≤x4<1, 0<y4≤0.2, 0≤z4≤0.2, 0.9≤x4+y4+z4≤1.1, and 0≤b4≤0.1, M⁶ is one or more element selected from Al, B, Ba, Ca, Ce, Cr, Fe, Mg, Mo, Nb, Si, Sr, Ti, V, W, and Zr, and X is one or more element selected from F, P, and S.

In the positive electrode of some example embodiments, a content of the positive electrode active material may be 90 wt% to 98 wt%, 50 wt% to 99 wt%, 60 wt% to 99 wt%, 70 wt% to 99 wt%, 80 wt% to 99 wt%, or 90 wt% to 99 wt% based on a total weight of the positive electrode active material layer.

In some embodiments of the present disclosure, the positive electrode active material layer may optionally include a conductive material (e.g., an electrically conductive material) and a binder. In some embodiments, each content of the conductive material and the binder may be 1.0 wt% to 5.0 wt%, based on a total weight of the positive electrode active material layer.

The conductive material is used to impart conductivity (e.g., electrical conductivity) to the negative electrode, and any suitable electrically conductive material may be used as a conductive material (e.g., an electrically conductive material) unless it causes a chemical change in a battery (e.g., an undesirable change in the rechargeable lithium battery). Examples of the conductive material may include a carbon-based material such as natural graphite, artificial graphite, carbon black, acetylene black, Ketjen black, carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions includes carbon materials. The carbon material may be any suitable generally-used carbon-based negative electrode active material in a rechargeable lithium battery. Examples of the carbon material include crystalline carbon, amorphous carbon, and a combination thereof. The crystalline carbon may be non-shaped, and/or sheet, flake, spherical, and/or fiber shaped natural graphite and/or artificial graphite. The amorphous carbon may be a soft carbon, a hard carbon, a mesophase pitch carbonized product, fired coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and/or the like. At least one of them may be mixed together with SiO₂.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and/or the like.

In some example embodiments, the negative electrode active material may include at least one selected from graphite and a Si composite.

The Si composite may include a core including Si particles and amorphous carbon, and for example, the Si particles may include at least one selected from Si composite, SiOₖ (0 < k ≤ 2), and an Si alloy.

For example, the Si-C composite may include a core including Si particles and amorphous carbon.

The central portion of the core may include pores, and the radius of the central portion may correspond to 30% to 50% of the radius of the Si-C composite.

The Si particles may have an average particle diameter of 10 nm to 200 nm.

As used herein, the average particle diameter may be a particle size (D50) at a volume ratio of 50% in a cumulative size-distribution curve.

When the average particle diameter of the Si particle is within the above range, volume expansion occurring during charging and discharging may be suppressed or reduced, and a disconnection of a conductive path due to particle crushing during charging and discharging may be prevented or reduced.

The Si particle may be included in an amount of 1 wt% to 60 wt%, for example, 3 wt% to 60 wt%, based on a total weight of the Si-C composite.

The central portion may not include amorphous carbon, but the amorphous carbon may be present only on the surface portion of the negative electrode active material.

Herein, the surface portion indicates a region from the central portion (e.g., a region just outside the central portion) of the negative electrode active material to the outermost surface of the negative electrode active material.

In some embodiments, the Si particles are substantially uniformly included over the negative electrode active material, for example, present at a substantially uniform concentration in the central portion and the surface portion thereof.

The amorphous carbon may be soft carbon, hard carbon, mesophase pitch carbonized product, calcined coke, or a combination thereof.

The negative electrode active material may further include crystalline carbon.

When the negative electrode active material includes a Si-C composite and crystalline carbon together, the Si-C composite and crystalline carbon may be included in the form of a mixture, and in some embodiments, the Si-C composite and crystalline carbon may be included in a weight ratio of 1:99 to 50:50. In some embodiments, the Si-C composite and crystalline carbon may be included in a weight ratio of 3 : 97 to 20 : 80 or 5 : 95 to 20 : 80.

The crystalline carbon may be for example graphite, and, for example, natural graphite, artificial graphite, or a mixture thereof.

The crystalline carbon may have an average particle diameter of 5 µm to 30 µm.

The amorphous carbon precursor may include a coal-based pitch, mesophase pitch, petroleum-based pitch, coal-based oil, petroleum-based heavy oil, and/or a polymer resin such as a phenol resin, a furan resin, and/or a polyimide resin.

In the negative electrode active material layer, the negative electrode active material may be included in an amount of 95 wt% to 99 wt% based on a total weight of the negative electrode active material layer.

In some example embodiments, the negative electrode active material layer may include a binder, and optionally a conductive material (e.g., an electrically conductive material). In the negative electrode active material layer, the amount of the binder may be 1 wt% to 5 wt% based on a total weight of the negative electrode active material layer. When it further includes the conductive material, it may include 90 wt% to 98 wt% of the negative electrode active material, 1 wt% to 5 wt% of the binder, and 1 wt% to 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder and/or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethyleneoxide, polyvinylpyrrolidone, polyepichlorohydrin, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and a combination thereof.

When the water-soluble binder is used as the negative electrode binder, a cellulose-based compound may be further used to provide viscosity as a thickener. The cellulose-based compound includes one or more of carboxylmethyl cellulose, hydroxypropylmethyl cellulose, methyl cellulose, and/or alkali metal salts thereof. The alkali metal may be Na, K, and/or Li. Such a thickener may be included in an amount of 0.1 to 3 wt% based on 100 wt% of the negative electrode active material.

The conductive material is included to provide electrode conductivity (e.g., electrical conductivity) and any suitable electrically conductive material may be used as a conductive material (e.g., an electrically conductive material) unless it causes a chemical change (e.g., unless it causes an undesirable change in the rechargeable lithium battery). Examples thereof may be a carbon-based material such as natural graphite, artificial graphite, carbon black, acetylene black, Ketjen black, carbon fiber and the like; a metal-based material such as a metal powder or a metal fiber of copper, nickel, aluminum, silver, and the like; a conductive polymer such as a polyphenylene derivative and the like, or a mixture thereof.

The negative electrode current collector may be selected from a copper foil, a nickel foil, a stainless steel foil, a titanium foil, a nickel foam, a copper foam, a polymer substrate coated with a conductive metal (e.g., an electrically conductive material), and a combination thereof.

The rechargeable lithium battery may further include a separator between the negative electrode and the positive electrode, depending on a type of the rechargeable lithium battery. This separator may be a porous substrate; or may be a composite porous substrate.

The porous substrate may be a substrate including pores, and lithium ions may move through the pores. The porous substrate may, for example, include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one selected from a heat-resistant layer and an adhesive layer from the viewpoint of enabling additional function. For example, the heat-resistant layer may include a heat-resistant resin and optionally a filler.

In some embodiments, the adhesive layer may include an adhesive resin and optionally a filler.

The filler may be an organic filler and/or an inorganic filler.

Referring to the accompanying drawing, a rechargeable lithium battery 100 according to some example embodiments includes an electrode assembly including a negative electrode 112, a positive electrode 114 facing the negative electrode 112, a separator 113 between the negative electrode 112 and the positive electrode 114, and an electrolyte impregnating the negative electrode 112, positive electrode 114, and separator 113, a battery case 120 housing the electrode assembly, and a sealing member 140 sealing the battery case 120. Herein, the battery case is a cylindrical can.

Hereinafter, examples and comparative examples of the present disclosure will be described.

### Preparation of Electrolyte

### Preparation Example 1

As for a non-aqueous organic solvent, a carbonate-based solvent was prepared by mixing together ethylene carbonate (EC): ethylmethyl carbonate (EMC): dimethyl carbonate (DMC) = 20:10:70 in a volume ratio.

To the non-aqueous organic solvent, 1.5 M lithium salt (LiPF₆) was added, and 1 wt% of the first additive represented by Chemical Formula 1-1-1 (CAS No. 16415-09-1) and 0.5 wt% of the second additive represented by Chemical Formula 2-1-1 (CAS No. 280-57-9) were added thereto to finally prepare an electrolyte.

Herein, a content (wt%) of each of the additives means the content (wt%) of each of the additives based on 100 wt% of the electrolyte. The same was applied hereinafter.

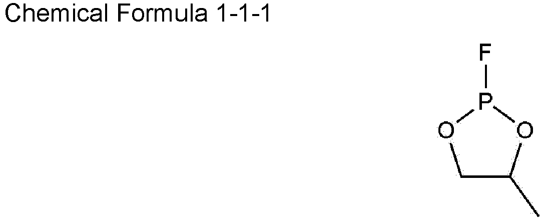

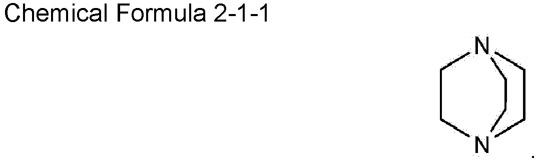

### Preparation Example 2

An electrolyte for a rechargeable lithium battery was manufactured in substantially the same manner as in Preparation Example 1 except that 1 wt% of the first additive represented by Chemical Formula 1-1-1 (CAS No. 16415-09-1) and 1 wt% of the second additive represented by Chemical Formula 2-1-1 (CAS No. 280-57-9) were used as the additives.

### Preparation Example 3

An electrolyte for a rechargeable lithium battery was manufactured in substantially the same manner as in Preparation Example 1 except that 1 wt% of the first additive represented by Chemical Formula 1-1-1 (CAS No. 16415-09-1) and 3 wt% of the second additive represented by Chemical Formula 2-1-1 (CAS No. 280-57-9) were used as the additives.

### Preparation Example 4

An electrolyte for a rechargeable lithium battery was manufactured in substantially the same manner as in Preparation Example 1 except that 1 wt% of the first additive represented by Chemical Formula 1-1-1 (CAS No. 16415-09-1) and 5 wt% of the second additive represented by Chemical Formula 2-1-1 (CAS No. 280-57-9) were used as the additives.

### Comparative Preparation Example 1

An electrolyte for a rechargeable lithium battery was manufactured in substantially the same manner as in Preparation Example 1 except that the additives were not used at all.

### Comparative Preparation Example 2

An electrolyte for a rechargeable lithium battery was manufactured in substantially the same manner as in Preparation Example 1 except that 1 wt% of the first additive represented by Chemical Formula 1-1-1 (CAS No. 16415-09-1) was used as the additive but the second additive represented by Chemical Formula 2-1-1 (CAS No. 280-57-9) was not used.

### Comparative Preparation Example 3

An electrolyte for a rechargeable lithium battery was manufactured in substantially the same manner as in Preparation Example 1 except that the first additive represented by Chemical Formula 1-1-1 (CAS No. 16415-09-1) was not used but 0.5 wt% of the second additive represented by Chemical Formula 2-1-1 (CAS No. 280-57-9) was used as the additive.

### Manufacture of Rechargeable Lithium Battery Cells

### Example 1

LiNi_{0.94}Co(_{0.04})Al(_{0.02})O₂ as a positive electrode active material, polyvinylidene fluoride as a binder, and Ketjen black as a conductive material were mixed together respectively in a weight ratio of 97:2:1, and then, dispersed in N-methyl pyrrolidone to prepare a positive electrode active material slurry.

The positive electrode active material slurry was coated on a 14 µm-thick Al foil, dried at 110 °C, and pressed to manufacture a positive electrode.

A mixture of artificial graphite and silicon particles in a weight ratio of 93.5:6.5 was used as the negative electrode active material, and the negative electrode active material, a styrene-butadiene rubber binder, and carboxylmethyl cellulose in a weight ratio of 97:1:2 were dispersed in distilled water to prepare a negative electrode active material slurry.

The negative electrode active material slurry was coated on a 10 µm-thick Cu foil, dried at 100 °C, and pressed to manufacture a negative electrode.

An electrode assembly was manufactured by assembling the manufactured positive electrode and negative electrode and a 25 µm-thick polyethylene separator, the electrode assembly was housed in a cylindrical can having a volume of 17 cm³, a diameter of 1.8 cm, and a height of 6.5 cm as a battery case, and each rechargeable lithium battery cell was manufactured by injecting the electrolyte for a rechargeable lithium battery of Preparation Example 1.

### Example 2

A rechargeable lithium battery cell was manufactured in substantially the same manner as Example 1, except that a cylindrical can having a volume of 24 cm³, a diameter of 2.1 cm, and a height of 7.0 cm was used as the battery case.

### Example 3

A rechargeable lithium battery cell was manufactured in substantially the same manner as Example 1, except that a cylindrical can having a volume of 133 cm³, a diameter of 4.6 cm, and a height of 8.0 cm was used as the battery case.

### Example 4

A rechargeable lithium battery cell was manufactured in substantially the same manner as Example 1, except that a cylindrical can having a volume of 296 cm³, a diameter of 5.6 cm, and a height of 12.0 cm was used as the battery case.

### Example 5

A rechargeable lithium battery cell was manufactured in substantially the same manner as Example 1, except that the electrolyte of Preparation Example 2 was used as the electrolyte.

### Example 6

A rechargeable lithium battery cell was manufactured in substantially the same manner as Example 5, except that a cylindrical can having a volume of 24 cm³, a diameter of 2.1 cm, and a height of 7.0 cm was used as the battery case.

### Example 7

A rechargeable lithium battery cell was manufactured in substantially the same manner as Example 5, except that a cylindrical can having a volume of 133 cm³, a diameter of 4.6 cm, and a height of 8.0 cm was used as the battery case.

### Example 8

A rechargeable lithium battery cell was manufactured in substantially the same manner as Example 5, except that a cylindrical can having a volume of 296 cm³, a diameter of 5.6 cm, and a height of 12.0 cm was used as the battery case.

### Example 9

A rechargeable lithium battery cell was manufactured in substantially the same manner as Example 1, except that the electrolyte of Preparation Example 3 was used as the electrolyte.

### Example 10

A rechargeable lithium battery cell was manufactured in substantially the same manner as Example 9, except that a cylindrical can having a volume of 24 cm³, a diameter of 2.1 cm, and a height of 7.0 cm was used as the battery case.

### Example 11

A rechargeable lithium battery cell was manufactured in substantially the same manner as Example 9, except that a cylindrical can having a volume of 133 cm³, a diameter of 4.6 cm, and a height of 8.0 cm was used as the battery case.

### Example 12

A rechargeable lithium battery cell was manufactured in substantially the same manner as Example 9, except that a cylindrical can having a volume of 296 cm³, a diameter of 5.6 cm, and a height of 12.0 cm was used as the battery case.

### Example 13

A rechargeable lithium battery cell was manufactured in substantially the same manner as Example 1, except that the electrolyte of Preparation Example 4 was used as the electrolyte.

### Example 14

A rechargeable lithium battery cell was manufactured in substantially the same manner as Example 13, except that a cylindrical can having a volume of 24 cm³, a diameter of 2.1 cm, and a height of 7.0 cm was used as the battery case.

### Example 15

A rechargeable lithium battery cell was manufactured in substantially the same manner as Example 13, except that a cylindrical can having a volume of 133 cm³, a diameter of 4.6 cm, and a height of 8.0 cm was used as the battery case.

### Example 16

A rechargeable lithium battery cell was manufactured in substantially the same manner as Example 13, except that a cylindrical can having a volume of 296 cm³, a diameter of 5.6 cm, and a height of 12.0 cm was used as the battery case.

### Comparative Example 1

A rechargeable lithium battery cell was manufactured in substantially the same manner as Example 1, except that a cylindrical can having a volume of 1 cm³, a diameter of 1.2 cm, and a height of 0.5 cm was used as a battery case, and the electrolyte for a rechargeable lithium battery of Comparative Preparation Example 1 was used as an electrolyte.

### Comparative Example 2

A rechargeable lithium battery cell was manufactured in substantially the same manner as Comparative Example 1, except that a cylindrical can having a volume of 17 cm³, a diameter of 1.8 cm, and a height of 6.5 cm was used as the battery case.

### Comparative Example 3

A rechargeable lithium battery cell was manufactured in substantially the same manner as Comparative Example 1, except that a cylindrical can having a volume of 24 cm³, a diameter of 2.1 cm, and a height of 7.0 cm was used as the battery case.

### Comparative Example 4

A rechargeable lithium battery cell was manufactured in substantially the same manner as Comparative Example 1, except that a cylindrical can having a volume of 133 cm³, a diameter of 4.6 cm, and a height of 8.0 cm was used as the battery case.

### Comparative Example 5

A rechargeable lithium battery cell was manufactured in substantially the same manner as Comparative Example 1, except that a cylindrical can having a volume of 296 cm³, a diameter of 5.6 cm, and a height of 12.0 cm was used as the battery case.

### Comparative Example 6

A rechargeable lithium battery cell was manufactured in substantially the same manner as Comparative Example 1, except that the electrolyte for a rechargeable lithium battery of Comparative Preparation Example 2 was used as the electrolyte.

### Comparative Example 7

A rechargeable lithium battery cell was manufactured in substantially the same manner as Comparative Example 6, except that a cylindrical can having a volume of 17 cm³, a diameter of 1.8 cm, and a height of 6.5 cm was used as the battery case.

### Comparative Example 8

A rechargeable lithium battery cell was manufactured in substantially the same manner as Comparative Example 6, except that a cylindrical can having a volume of 24 cm³, a diameter of 2.1 cm, and a height of 7.0 cm was used as the battery case.

### Comparative Example 9

A rechargeable lithium battery cell was manufactured in substantially the same manner as Comparative Example 6, except that a cylindrical can having a volume of 133 cm³, a diameter of 4.6 cm, and a height of 8.0 cm was used as the battery case.

### Comparative Example 10

A rechargeable lithium battery cell was manufactured in substantially the same manner as Comparative Example 6, except that a cylindrical can having a volume of 296 cm³, a diameter of 5.6 cm, and a height of 12.0 cm was used as the battery case.

### Comparative Example 11

A rechargeable lithium battery cell was manufactured in substantially the same manner as Comparative Example 1, except that the electrolyte for a rechargeable lithium battery of Comparative Preparation Example 3 was used as the electrolyte.

### Comparative Example 12

A rechargeable lithium battery cell was manufactured in substantially the same manner as Comparative Example 11, except that a cylindrical can having a volume of 17 cm³, a diameter of 1.8 cm, and a height of 6.5 cm was used as the battery case.

### Comparative Example 13

A rechargeable lithium battery cell was manufactured in substantially the same manner as Comparative Example 11, except that a cylindrical can having a volume of 24 cm³, a diameter of 2.1 cm, and a height of 7.0 cm was used as the battery case.

### Comparative Example 14

A rechargeable lithium battery cell was manufactured in substantially the same manner as Comparative Example 11, except that a cylindrical can having a volume of 133 cm³, a diameter of 4.6 cm, and a height of 8.0 cm was used as the battery case.

### Comparative Example 15

A rechargeable lithium battery cell was manufactured in substantially the same manner as Comparative Example 11, except that a cylindrical can having a volume of 296 cm³, a diameter of 5.6 cm, and a height of 12.0 cm was used as the battery case.

### Comparative Example 16

A rechargeable lithium battery cell was manufactured in substantially the same manner as Example 1, except that a cylindrical can having a volume of 1 cm³, a diameter of 1.2 cm, and a height of 0.5 cm was used as the battery case.

### Comparative Example 17

A rechargeable lithium battery cell was manufactured in substantially the same manner as Example 5, except that a cylindrical can having a volume of 1 cm³, a diameter of 1.2 cm, and a height of 0.5 cm was used as the battery case.

### Comparative Example 18

A rechargeable lithium battery cell was manufactured in substantially the same manner as Example 9, except that a cylindrical can having a volume of 1 cm³, a diameter of 1.2 cm, and a height of 0.5 cm was used as the battery case.

### Comparative Example 19

A rechargeable lithium battery cell was manufactured in substantially the same manner as Example 13, except that a cylindrical can having a volume of 1 cm³, a diameter of 1.2 cm, and a height of 0.5 cm was used as the battery case.

### Evaluation: 60 °C High-temperature Storage Evaluation

Each of the rechargeable lithium battery cells was subjected to initial formation in the following process. The cells were CC-CV charged to 4.2 V with a current of 0.2 C (0.05 C cut-off) and then discharged to 2.5 V twice.

After the formation step, the rechargeable lithium battery cells were charged at 60 °C at 1 C under the conditions of 4.2 V cut-off constant current and 0.05 C cut-off constant voltage to SOC 100% (SOC, state of charge = 100%) and stored for 60 days.

As described above, the rechargeable lithium battery cells were stored at a high temperature of 60 °C, and then an amount of Ni eluted per volume of the cylindrical can, capacity retention rate, and resistance increase rate were evaluated. The capacity maintenance rate was obtained by Equation 1, and the resistance increase rate was obtained by Equation 2. Capacity retention rate = 100* (discharge capacity after 30 days of storage at 60 °C)/(initial discharge capacity) Resistance increase rate (ΔDC-IR) = 100* (DC-IR after 30 days of storage at 60 °C)/(initial DC-IR)

Herein, DC resistance (DC-IR) was calculated from a current difference and a voltage difference, when different currents were applied, and specifically, calculated from data at 18 seconds and 23 seconds obtained according to ΔR =ΔV/ΔI after constant current-discharging at 10 A for 10 seconds, at 1 A for 10 seconds, and at 10 A for 4 seconds in the initial full charge state.

**Table 1**

| | Cylindrical can specifications | | Electrolyte | | 60 °C high-temperature characteristics | | |
|---|---|---|---|---|---|---|---|
| | Volume (cm³) | Diameter, height (cm) | Content of first additive (wt%) | Content of second additive (%) | Ni elution amount per volume of cylindrical can @ 30^{th} day (ppm/ cm³) | Capacity retention rate (%) @30^{th} day | Resistanc e increase rate (%) @30^{th} day |
| Comp. Ex. 1 | 1 | diameter 1.2, height 0.5 | 0 | 0 | 48 | 63.1 | 57.4 |
| Comp. Ex. 2 | 17 | diameter 1.8, height 6.5 | | | 11 | 63.2 | 58.4 |
| Comp. Ex. 3 | 24 | diameter 2.1, height 7.0 | | | 11 | 57.7 | 63.4 |
| Comp. Ex. 4 | 133 | diameter 4.6, height 8.0 | | | 3.6 | 56.5 | 62.1 |
| Comp. Ex. 5 | 296 | diameter 5.6, height 12.0 | | | 6.2 | 54.2 | 62.4 |
| Comp. Ex. 6 | 1 | diameter 1.2, height 0.5 | 1 | 0 | 42 | 64.1 | 57.1 |
| Comp. Ex. 7 | 17 | diameter 1.8, height 6.5 | | | 9.5 | 65.4 | 55.2 |
| Comp. Ex. 8 | 24 | diameter 2.1, height 7.0 | | | 11 | 60.7 | 61.2 |
| Comp. Ex. 9 | 133 | diameter 4.6, height 8.0 | | | 3.3 | 58.1 | 58 |
| Comp. Ex. 10 | 296 | diameter 5.6, height 12.0 | | | 6.1 | 54.1 | 62.4 |
| Comp. Ex. 11 | 1 | diameter 1.2, height 0.5 | 0 | 0.5 | 41 | 65.4 | 56.3 |
| Comp. Ex. 12 | 17 | diameter 1.8, height 6.5 | | | 7.2 | 66.1 | 56.1 |
| Comp. Ex. 13 | 24 | diameter 2.1, height 7.0 | | | 9.3 | 61.4 | 61.8 |
| Comp. Ex. 14 | 133 | diameter 4.6, height 8.0 | | | 2.9 | 59.4 | 59.9 |
| Comp. Ex. 15 | 296 | diameter 5.6, height 12.0 | | | 6.1 | 55.1 | 61.4 |
| Comp. Ex. 16 | 1 | diameter 1.2, height 0.5 | 1 | 0.5 | 36 | 67.4 | 54.1 |
| Ex. 1 | 17 | diameter 1.8, height 6.5 | | | 5.5 | 70.1 | 53.1 |
| Ex. 2 | 24 | diameter 2.1, height 6.5 | | | 5.6 | 65.2 | 58.6 |
| Ex. 3 | 133 | diameter 4.6, height 8.0 | | | 1.7 | 64.1 | 57.1 |
| Ex. 4 | 296 | diameter 5.6, height 12.0 | | | 5.7 | 57.1 | 60.8 |
| Comp. Ex. 17 | 1 | diameter 1.2, height 0.5 | | 1 | 38 | 66.8 | 54.2 |
| Ex. 5 | 17 | diameter 1.8, height 6.5 | | | 4.6 | 72.4 | 50.4 |
| Ex. 6 | 24 | diameter 2.1, height 6.5 | | | 4.7 | 67.5 | 55.4 |
| Ex. 7 | 133 | diameter 4.6, height 8.0 | | | 1.5 | 67.4 | 54.5 |
| Ex. 8 | 296 | diameter 5.6, height 12.0 | | | 5.6 | 58.2 | 60.4 |
| Comp. Ex. 18 | 1 | diameter 1.2, height 0.5 | | 3 | 35 | 70.4 | 53.7 |
| Ex. 9 | 17 | diameter 1.8, height 6.5 | | | 3.6 | 74.2 | 47.4 |
| Ex. 10 | 24 | diameter 2.1, height 6.5 | | | 4.1 | 70.1 | 53.5 |
| Ex. 11 | 133 | diameter 4.6, height 8.0 | | | 1.2 | 69.4 | 52.9 |
| Ex. 12 | 296 | diameter 5.6, height 12.0 | | | 5.4 | 60.4 | 59.1 |
| Comp. Ex. 19 | 1 | diameter 1.2, height 0.5 | | 5 | 39 | 67.2 | 54.1 |
| Ex. 13 | 17 | diameter 1.8, height 6.5 | | | 3.2 | 68.1 | 49.2 |
| Ex. 14 | 24 | diameter 2.1, height 6.5 | | | 3.3 | 65.1 | 53.9 |
| Ex. 15 | 133 | diameter 4.6, height 8.0 | | | 0.9 | 64.1 | 56.4 |
| Ex. 16 | 296 | diameter 5.6, height 12.0 | | | 5.3 | 59.4 | 61.2 |

Referring to Table 1, a change in the amount of metal elution occurs when the volume of the cylindrical can exceeds 15 cm³, for example, is greater than or equal to 16 cm³.

In some embodiments, compared to embodiments where only one of the additives or both additives are used concurrently and the content of the second additive in the electrolyte is controlled to greater than or equal to 5 wt%; when the two types of additives are used concurrently and the content of the second additive in the electrolyte is controlled to less than 5 wt%, high-temperature characteristics of the rechargeable lithium battery cells are more improved.

Overall, the rechargeable lithium battery cells according to some example embodiments represented by Examples 1 to 16 control the volumes of the cylindrical cans and limit the type and content of the electrolyte additive, thereby suppressing or reducing metal elution and increasing resistance at high temperatures and/or improving cycle-life.

### Description of symbols

100: rechargeable lithium battery
112: negative electrode
113: separator
114: positive electrode
120: battery case
140: sealing member

## Claims

1. A rechargeable lithium battery (100), comprising:
a cylindrical can having a volume of greater than or equal to 15 cm³,
an electrode assembly accommodated in the cylindrical can, and
an electrolyte impregnated in the electrode assembly,
wherein the electrolyte comprises:
a non-aqueous organic solvent;
a lithium salt;
a first additive comprising a compound represented by Chemical Formula 1; and
a second additive comprising a compound represented by Chemical Formula 2, a derivative thereof, and/or an adduct thereof,
a content of the second additive is less than about 5 wt% based on 100 wt% of the electrolyte: 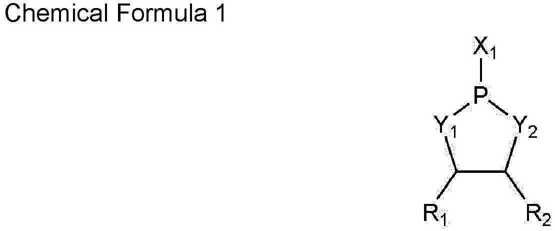 wherein, in Chemical Formula 1,
X₁ is a halogen atom;
Y₁ and Y₂ are each independently O or S;
R₁ and R₂ are each independently H, a halogen atom, a substituted or unsubstituted C1 to C10 alkyl group, a vinyl group, a substituted or unsubstituted C6 to C10 aryl group, or a substituted or unsubstituted C2 to C10 heteroaryl group comprising a hetero atom of N, O, or P; 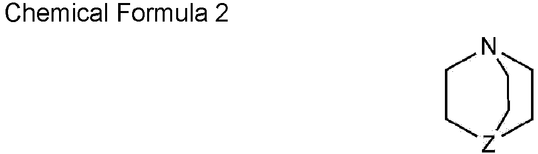 wherein, in Chemical Formula 2,
Z is N or CH.

2. The rechargeable lithium battery of claim 1, wherein:
the volume of the cylindrical can is 16 cm³ to 296 cm³, in particular 16 cm³ to 133 cm³.

3. The rechargeable lithium battery of claim 1 or 2, wherein:
X¹ is a fluorine atom.

4. The rechargeable lithium battery of any one of the preceding claims, wherein:
both Y¹ and Y² are O.

5. The rechargeable lithium battery of claim 1, wherein:
the first additive is a compound represented by Chemical Formula 1-1-1:

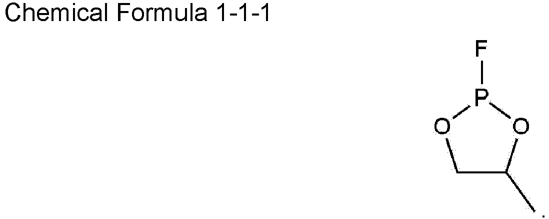

6. The rechargeable lithium battery of any one of the preceding claims, wherein:
a content of the first additive is 0.05 to 3 wt% based on 100 wt% of the electrolyte.

7. The rechargeable lithium battery of any one of the preceding claims, wherein:
the second additive comprises at least one selected from a compound represented by Chemical Formula 2-1-1, a compound represented by Chemical Formula 2-1-1, a compound represented by Chemical Formula 2-2-1, a compound represented by Chemical Formula 2-2-2, a compound represented by Chemical Formula 2-3-1, and a compound represented by Chemical Formula 2-3-2:

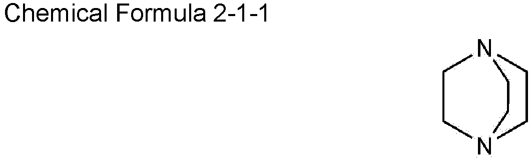

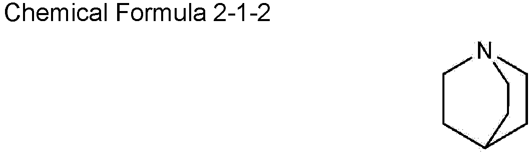

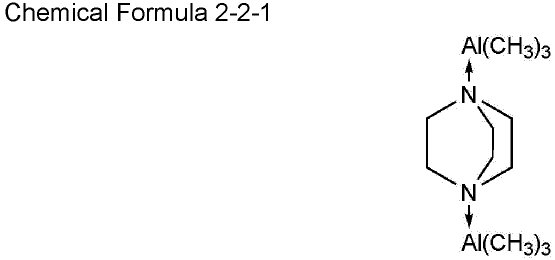

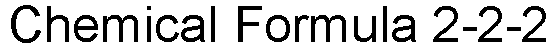

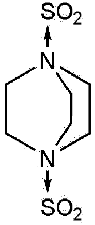

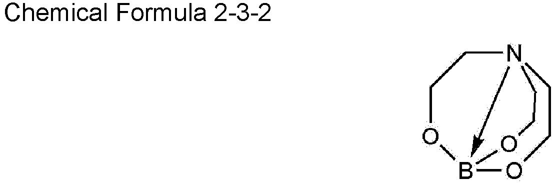

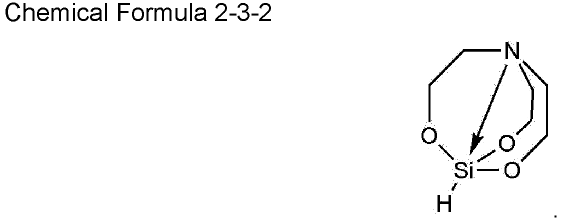

8. The rechargeable lithium battery of any one of the preceding claims, wherein:
a content of the second additive is 0.05 to 3 wt% based on 100 wt% of the electrolyte.

9. The rechargeable lithium battery of any one of the preceding claims, wherein:
a weight ratio of the first additive to the second additive is 1:0.1 to 1:3.

10. The rechargeable lithium battery of any one of the preceding claims, wherein:
the non-aqueous organic solvent comprises at least one of a carbonate-based solvent, an ester-based solvent, an ether-based solvent, a ketone-based solvent, an alcohol-based solvent, and an aprotic solvent.

11. The rechargeable lithium battery of claim 10, wherein:
the non-aqueous organic solvent comprises a carbonate-based solvent comprising a mixture of a cyclic carbonate and a linear carbonate in a volume ratio of 5:95 to 50:50.

12. The rechargeable lithium battery of any one of the preceding claims, wherein:
the electrode assembly comprises:
a positive electrode (114) comprising a positive active material layer;
a negative electrode (112) comprising a negative electrode active material layer; and
a separator between the positive electrode (114) and the negative electrode (112).

13. The rechargeable lithium battery of claim 12, wherein:
the positive active material layer comprises a lithium nickel-based composite oxide represented by Chemical Formula A1:
Chemical Formula A1 Liₐ₁Niₓ₁M¹_{y1}M²_{z1}O_{2-b1}X_{b1}
wherein, in Chemical Formula A1,
0.9≤a1≤1.2, 0.7≤x1≤1, 0≤y1≤0.2, 0≤z1≤0.2, 0.9≤x1+y1+z1≤1.1, and 0≤b1≤0.1;
M¹ and M² are each independently one or more element selected from Al, B, Ba, Ca, Ce, Co, Cr, Cu, Fe, Mg, Mn, Mo, Nb, Si, Sr, Ti, V, W, and Zr; and
X is one or more element selected from F, P, and S.

14. The rechargeable lithium battery of claim 12, wherein:
the negative electrode active material layer comprises at least one selected from graphite and a Si composite.

15. The rechargeable lithium battery of any one of the preceding claims, wherein:
the rechargeable lithium battery (100) further comprises a sealing member (140) that seals the cylindrical can.

## Patentansprüche

1. Wiederaufladbare Lithiumbatterie (100), umfassend:
eine zylindrische Hülse mit einem Volumen von mehr als oder gleich 15 cm³,
eine Elektrodenbaugruppe, die in der zylindrischen Hülse aufgenommen ist, und
einen Elektrolyten, mit dem die Elektrodenbaugruppe imprägniert ist,
wobei der Elektrolyt Folgendes umfasst:
ein nicht wässriges organisches Lösungsmittel;
ein Lithiumsalz;
ein erstes Additiv, das eine durch die chemische Formel 1 dargestellte Verbindung umfasst; und
ein zweites Additiv, das eine durch die chemische Formel 2 dargestellte Verbindung, ein Derivat davon und/oder ein Addukt davon umfasst,
wobei ein Gehalt des zweiten Additivs weniger als etwa 5 Gew.-% basierend auf 100 Gew.-% des Elektrolyten beträgt: 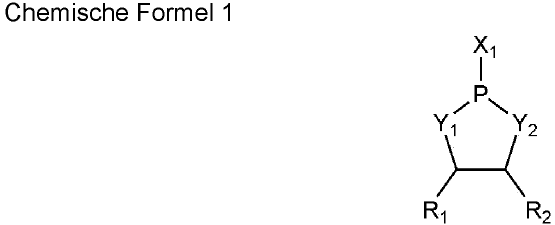 wobei in der chemischen Formel 1
X₁ ein Halogenatom ist;
Y₁ und Y₂ jeweils unabhängig O oder S sind;
R₁ und R₂ jeweils unabhängig H, ein Halogenatom, eine substituierte oder unsubstituierte C1- bis C10-Alkylgruppe, eine Vinylgruppe, eine substituierte oder unsubstituierte C6- bis C10-Arylgruppe oder eine substituierte oder unsubstituierte C2-bis C10-Heteroarylgruppe, umfassend ein Heteroatom von N, O oder P, sind; 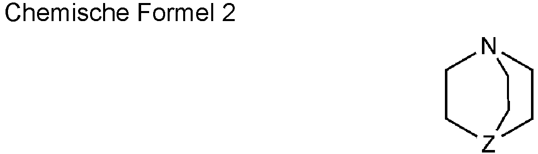 wobei in der chemischen Formel 2
Z N oder CH ist.

2. Wiederaufladbare Lithiumbatterie nach Anspruch 1, wobei:
das Volumen der zylindrischen Hülse 16 cm³ bis 296 cm³, insbesondere 16 cm³ bis 133 cm³, beträgt.

3. Wiederaufladbare Lithiumbatterie nach Anspruch 1 oder 2, wobei:
X¹ ein Fluoratom ist.

4. Wiederaufladbare Lithiumbatterie nach einem der vorhergehenden Ansprüche, wobei:
sowohl Y¹ als auch Y² O sind.

5. Wiederaufladbare Lithiumbatterie nach Anspruch 1, wobei:
das erste Additiv eine durch die chemische Formel 1-1-1 dargestellte Verbindung ist:

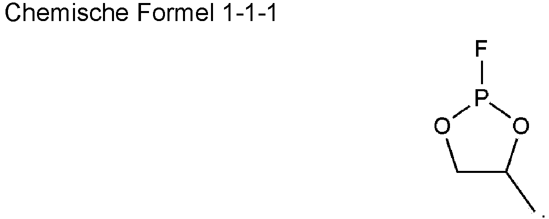

6. Wiederaufladbare Lithiumbatterie nach einem der vorhergehenden Ansprüche, wobei:
ein Gehalt des ersten Additivs 0,05 bis 3 Gew.-% basierend auf 100 Gew.-% des Elektrolyten beträgt.

7. Wiederaufladbare Lithiumbatterie nach einem der vorhergehenden Ansprüche, wobei:
das zweite Additiv mindestens eine umfasst, die ausgewählt ist aus einer durch die chemische Formel 2-1-1 dargestellten Verbindung, einer durch die chemische Formel 2-1-1 dargestellten Verbindung, einer durch die chemische Formel 2-2-1 dargestellten Verbindung, einer durch die chemische Formel 2-2-2 dargestellten Verbindung, einer durch die chemische Formel 2-3-1 dargestellten Verbindung und einer durch die chemische Formel 2-3-2 dargestellten Verbindung:

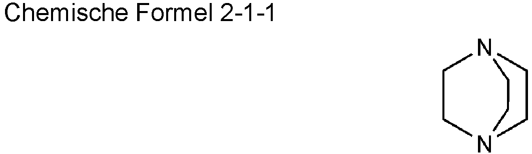

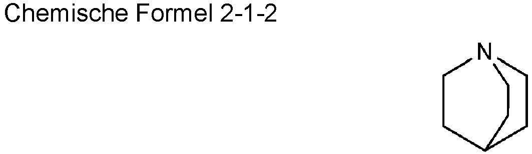

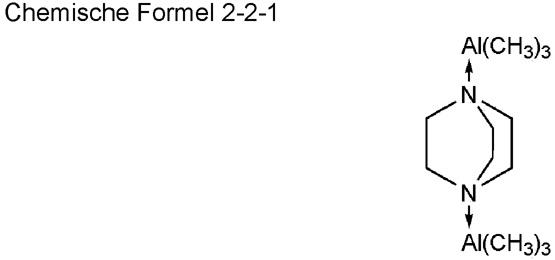

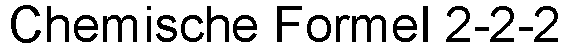

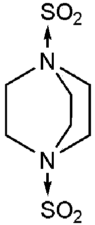

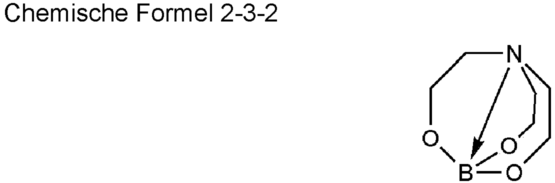

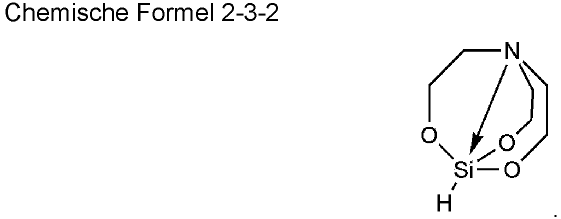

8. Wiederaufladbare Lithiumbatterie nach einem der vorhergehenden Ansprüche, wobei:
ein Gehalt des zweiten Additivs 0,05 bis 3 Gew.-% basierend auf 100 Gew.-% des Elektrolyten beträgt.

9. Wiederaufladbare Lithiumbatterie nach einem der vorhergehenden Ansprüche, wobei:
ein Gewichtsverhältnis des ersten Additivs zum zweiten Additiv 1:0,1 bis 1:3 beträgt.

10. Wiederaufladbare Lithiumbatterie nach einem der vorhergehenden Ansprüche, wobei:
das nicht wässrige organische Lösungsmittel mindestens eines von einem Lösungsmittel auf Carbonatbasis, einem Lösungsmittel auf Esterbasis, einem Lösungsmittel auf Etherbasis, einem Lösungsmittel auf Ketonbasis, einem Lösungsmittel auf Alkoholbasis und einem aprotischen Lösungsmittel umfasst.

11. Wiederaufladbare Lithiumbatterie nach Anspruch 10, wobei:
das nicht wässrige organische Lösungsmittel ein Lösungsmittel auf Carbonatbasis umfasst, das ein Gemisch aus einem cyclischen Carbonat und einem linearen Carbonat in einem Volumenverhältnis von 5:95 bis 50:50 umfasst.

12. Wiederaufladbare Lithiumbatterie nach einem der vorhergehenden Ansprüche, wobei:
die Elektrodenbaugruppe Folgendes umfasst:
eine positive Elektrode (114), die eine positive Aktivmaterialschicht umfasst;
eine negative Elektrode (112), die eine Aktivmaterialschicht für die negative Elektrode umfasst; und
einen Trenner zwischen der positiven Elektrode (114) und der negativen Elektrode (112).

13. Wiederaufladbare Lithiumbatterie nach Anspruch 12, wobei:
die positive Aktivmaterialschicht ein Verbundoxid auf Lithium-Nickel-Basis umfasst, das durch die chemische Formel A1 dargestellt ist:
Chemische Formel A1 Liₐ₁Niₓ₁M¹_{y1}M²_{z1}O_{2-b1}X_{b1}
wobei in der chemischen Formel A1
0,9≤a1≤1,2, 0,7≤x1≤1, 0≤y1≤0,2, 0≤z1≤0,2, 0,9≤x1+y1+z1≤1,1 und 0≤b1≤0,1;
M¹ und M² jeweils unabhängig ein oder mehrere Elemente sind, die ausgewählt sind aus Al, B, Ba, Ca, Ce, Co, Cr, Cu, Fe, Mg, Mn, Mo, Nb, Si, Sr, Ti, V, W und Zr; und
X ein oder mehrere Elemente ist, die ausgewählt sind aus F, P und S.

14. Wiederaufladbare Lithiumbatterie nach Anspruch 12, wobei:
die Aktivmaterialschicht für die negativen Elektrode mindestens eines von Graphit und einem Si-Verbund umfasst.

15. Wiederaufladbare Lithiumbatterie nach einem der vorhergehenden Ansprüche, wobei:
die wiederaufladbare Lithiumbatterie (100) ferner ein Dichtungselement (140) umfasst, das die zylindrische Hülse abdichtet.

## Revendications

1. Batterie au lithium rechargeable (100), comprenant :
un boîtier cylindrique ayant un volume supérieur ou égal à 15 cm³,
un ensemble électrode logé dans le boîtier cylindrique, et
un électrolyte imprégné dans l'ensemble électrode,
dans laquelle l'électrolyte comprend :
un solvant organique non aqueux ;
un sel de lithium ;
un premier additif comprenant un composé représenté par la formule chimique 1 ; et
un deuxième additif comprenant un composé représenté par la formule chimique 2, un dérivé de celui-ci et/ou un adduit de celui-ci,
une teneur en deuxième additif est inférieure à environ 5 % en poids sur la base de 100 % en poids de l'électrolyte : 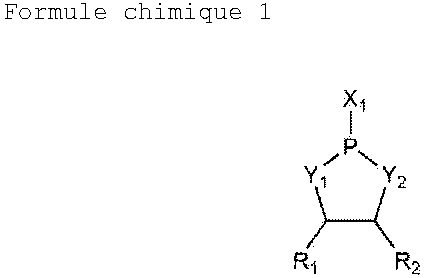 dans laquelle, dans la formule chimique 1,
X₁ est un atome d'halogène ;
Y₁ et Y₂ sont chacun indépendamment O ou S ;
R₁ et R₂ sont chacun indépendamment H, un atome d'halogène, un groupe alkyle en C1 à C10 substitué ou non substitué, un groupe vinyle, un groupe aryle en C6 à C10 substitué ou non substitué, ou un groupe hétéroaryle en C2 à C10 substitué ou non substitué comprenant un atome hétéro de N, O ou P ; 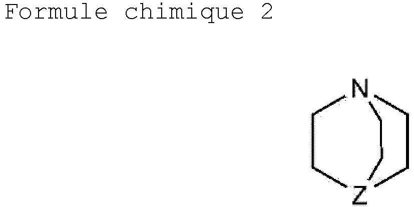 dans laquelle, dans la formule chimique 2,
Z est N ou CH.

2. Batterie au lithium rechargeable selon la revendication 1, dans laquelle :
le volume du boîtier cylindrique est de 16 cm³ à 296 cm³, en particulier de 16 cm³ à 133 cm³.

3. Batterie au lithium rechargeable selon la revendication 1 ou 2, dans laquelle :
X¹ est un atome de fluor.

4. Batterie au lithium rechargeable selon l'une des revendications précédentes, dans laquelle :
Y¹ et Y² sont tous deux O.

5. Batterie au lithium rechargeable selon la revendication 1, dans laquelle :
le premier additif est un composé représenté par la formule chimique 1-1-1 :

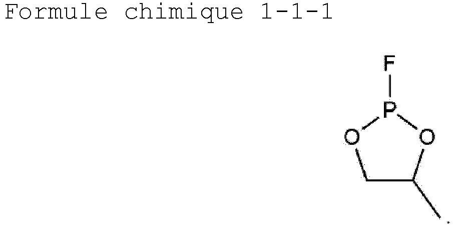

6. Batterie au lithium rechargeable selon l'une quelconque des revendications précédentes, dans laquelle :
une teneur en premier additif est de 0,05 à 3 % en poids sur la base de 100 % en poids de l'électrolyte.

7. Batterie au lithium rechargeable selon l'une quelconque des revendications précédentes, dans laquelle :
le deuxième additif comprend au moins l'un sélectionné parmi un composé représenté par la formule chimique 2-1-1, un composé représenté par la formule chimique 2-1-1, un composé représenté par la formule chimique 2-2-1, un composé représenté par la formule chimique 2-2-2, un composé représenté par la formule chimique 2-3-1 et un composé représenté par la formule chimique 2-3-2 :

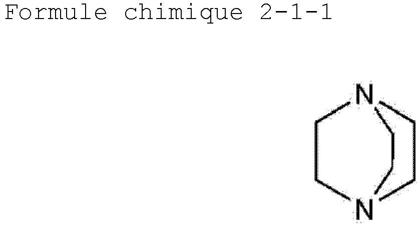

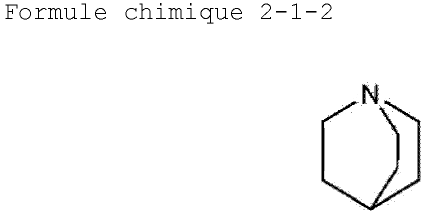

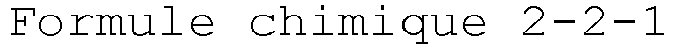

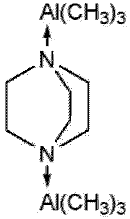

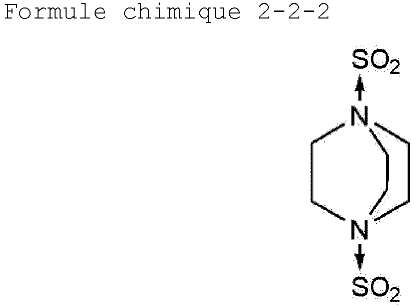

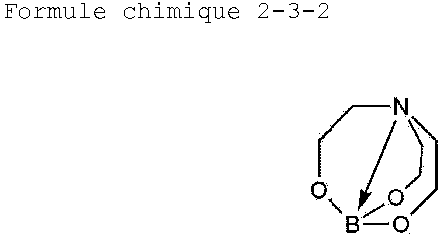

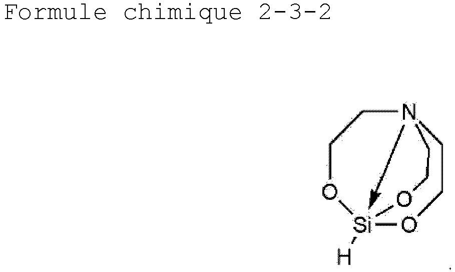

8. Batterie au lithium rechargeable selon l'une quelconque des revendications précédentes, dans laquelle :
une teneur en deuxième additif est de 0,05 à 3 % en poids sur la base de 100 % en poids de l'électrolyte.

9. Batterie au lithium rechargeable selon l'une quelconque des revendications précédentes, dans laquelle :
un rapport en poids entre le premier additif et le deuxième additif est de 1:0,1 à 1:3.

10. Batterie au lithium rechargeable selon l'une quelconque des revendications précédentes, dans laquelle :
le solvant organique non aqueux comprend au moins l'un d'un solvant à base de carbonate, d'un solvant à base d'ester, d'un solvant à base d'éther, d'un solvant à base de cétone, d'un solvant à base d'alcool et d'un solvant aprotique.

11. Batterie au lithium rechargeable selon la revendication 10, dans laquelle :
le solvant organique non aqueux comprend un solvant à base de carbonate comprenant un mélange d'un carbonate cyclique et d'un carbonate linéaire dans un rapport volumique de 5:95 à 50:50.

12. Batterie au lithium rechargeable selon l'une quelconque des revendications précédentes, dans laquelle :
l'ensemble électrode comprend :
une électrode positive (114) comprenant une couche de matériau actif positif ;
une électrode négative (112) comprenant une couche de matériau actif d'électrode négative ; et
un séparateur entre l'électrode positive (114) et l'électrode négative (112).

13. Batterie au lithium rechargeable selon la revendication 12, dans laquelle :
la couche de matériau actif positif comprend un oxyde composite à base de nickel représenté par la formule chimique A1 :
Formule chimique A1 Liₐ₁Niₓ₁M¹_{y1}M²_{z1}O_{2-b1}X_{b1}
dans laquelle, dans la formule chimique A1,
0,9 ≤ a1 ≤ 1,2, 0,7 ≤ x1 ≤ 1, 0 ≤ y1 ≤ 0,2, 0 ≤ z1 ≤ 0,2, 0,9 ≤ x1 + y1 + z1 ≤ 1,1 et 0 ≤ b1 ≤ 0,1 ;
M¹ et M² sont chacun indépendamment un ou plusieurs éléments sélectionnés parmi Al, B, Ba, Ca, Ce, Co, Cr, Cu, Fe, Mg, Mn, Mo, Nb, Si, Sr, Ti, V, W et Zr ; et
X est un ou plusieurs éléments sélectionnés parmi F, P et S.

14. Batterie au lithium rechargeable selon la revendication 12, dans laquelle :
la couche de matériau actif d'électrode négative comprend au moins l'un sélectionné parmi du graphique et un composite Si.

15. Batterie au lithium rechargeable selon l'une quelconque des revendications précédentes, dans laquelle :
la batterie au lithium rechargeable (100) comprend en outre un élément de scellement (140) qui scelle le boîtier cylindrique.
